# EUROPEAN PATENT APPLICATION

(11) **EP 2 680 189 A1**
(43) Date of publication of application: **01.01.2014**
(21) Application number: 12305740.8
(22) Date of filing: 26.06.2012
(51) Int. Cl.: G06K 9/00, G06K 9/62

(54) **Method and system for generating multimedia descriptors**

(71) Applicant: Alcatel Lucent, 75007 Paris (FR)
(72) Inventor: Namboodiri, Vinay, 3000 Leuven (BE); Tytgat, Donny, 9000 Gent (BE); Lievens, Sammy, 2930 Brasschaat (BE); Six, Erwin, 9270 Kalken (BE)
(74) Representative: ALU Antw Patent Attorneys

(57) **Abstract**

Method for generating multimedia descriptors from input multimedia content, said method includes a training procedure for generating a learned model in an iterative procedure based on received training media content, and from a plurality of localization identifiers provided by a plurality of detectors, said method further including the steps of generating said multimedia descriptors together with associated localization identifiers, based on said learned model, and a step of providing the generated multimedia descriptors together with the associated localization identifiers within the media as an output.

## Description

The present invention relates to a method and a system for generating multimedia descriptors from multimedia input files.

An object of the present invention is therefore to provide a method and a tool for generating multimedia descriptors from input multimedia content, which can be done in real time and delivers more precise and reliable metadata descriptors than the present systems. In addition it is the aim to provide also localization identifiers such as bounding boxes for indicating within the input media , where the detected objects, as identified by their descriptors, are exactly located.

According to the invention, this object is achieved by providing a method for generating multimedia descriptors from input multimedia content, said method includes a training procedure for generating a learned model in an iterative procedure based on received training media content, and from a plurality of localization identifiers provided by a plurality of detectors, said method further including the steps of generating said multimedia descriptors together with associated localization identifiers, based on said learned model, and a step of providing the generated multimedia descriptors together with the associated localization identifiers within the media as an output.

In this way, the iterative learning aspect combined with auxiliary detector information enables to generate more precise descriptors as well as bounding boxes in comparison to the known methods

In an embodiment the method further comprises the steps of generating low level training features and descriptors from said training media content such that said low level training features and descriptors are used by said plurality of detectors during said training procedure.

In another variant said multimedia descriptors with said associated localization identifiers are further determined from localization identifiers provided by said plurality of other detectors.

Another embodiment further comprises a step of generating low level features and descriptors from said input multimedia content, which are further used by said plurality of detectors and during the generation of said localization identifiers.

The present invention relates as well to a system for implementing such a method and to a computer program for implementing the steps of the method.

The above and other objects and features of the invention will become more apparent and the invention itself will be best understood by referring to the following description of an embodiment taken in conjunction with the accompanying drawings wherein:

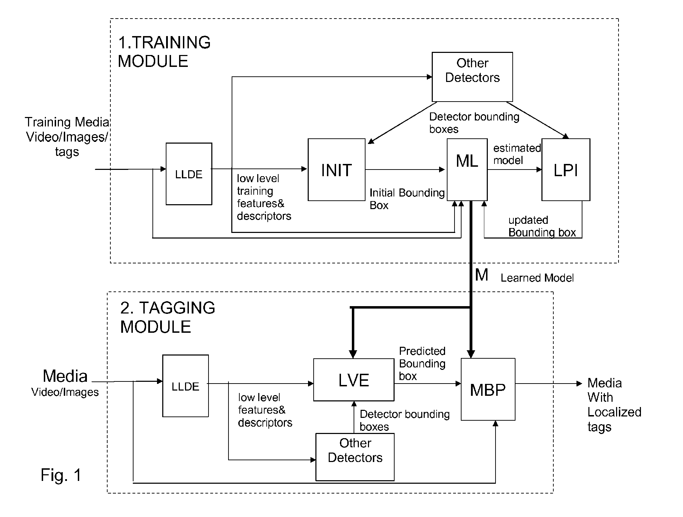

Fig. 1 shows a high level architecture of the present method

The following merely illustrates the principles of the invention. It will thus be appreciated that those skilled in the art will be able to devise various arrangements that, although not explicitly described or shown herein, embody the principles of the invention and are included within its spirit and scope. Furthermore, all examples and conditional language recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

The present invention concerns a method for generating media descriptors from multimedia data such as audio, voice, video, images, graphics, 3D models, etc. Fig. 1 shows the basic building blocks of the method and system whereby input media comprising raw audio/video/speech... input data, e.g. video and audio data under the form of frames, are provided as input data for the method or to a system for implementing the method.

The method comprises two main stages : a first stage, performed by a first module, being a training module as indicated in fig. 1, aims to learn an accurate model of the object class, also named tag, to be detected/identified in a next stage, performed by a second module, denoted "tagging module" in fig. 1. The determination of such an accurate model helps to automatically identify and detect the objects from the multimedia input. Furthermore, by means of an accurate object model, the determination of the bounding boxes, for indicating within the media, e.g. thus within the images themselves, where the object is located, will also be much facilitated.

The input multimedia used for the training are dedicated training multimedia, known beforehand to contain objects of which the model is to be learned in the training module. The training multimedia data furthermore contains tag or descriptor information with respect to these objects.

The training module itself is built up from different sub-modules, as shown in the figure. However in other embodiments this delineation into different sub-modules is not present, and the complete method, or several steps in combination may be performed by one single processor, or a combination of several processors working together.

Returning back to the figure, the training module comprises a first sub-module, denoted LLDE, which aims to extract low level descriptors from the input media. Together with the determination of these low level descriptors, which may just be an indication of a gradient in the color level of a group of pixels, low level features are also determined, which may also just relate to a histogram of this gradient for the aforementioned example. These are provided to several other detectors, which can e.g. comprise a hand, face, generic object, person, car,... detector.

These other detectors are able to determine bounding boxes, from the low level features and descriptors, which bounding boxes are an example of localization identifiers for indicating within the images/video frames, where exactly the objects detected by these other detectors are located. They may for instance provide bounding boxes around a detected hand, another bounding box around a detected face .

These low level features and descriptors, provided by the LLDE module, are as well provided to an initialization module, denoted INIT, which also receives from these other detectors e.g. face and hand detectors, their bounding boxes. From all this information the initialization module will then be able to determine an initial bounding box e.g. by selecting a bounding box associated to the most likely object detected by one of the other detectors. This initially determined bounding box is provided to a model learning block, denoted ML, which also receives the training input media, the low level features and descriptors, the input descriptor or the object to be detected, e.g. a person, as well as, via a feedback loop from a next sub-module, a re-estimated bounding box. At the onset of the method, this re-estimated bounding box is not yet ready, so at this stage no signal is provided at this input. The model learning block is adapted to extract and derive from the input media, from the initial bounding box and from the low level descriptors and features a model of a person with respect to the aforementioned example, which is to be used in the next stage of the method. During the training phase however, several estimates of the model are determined in an iterative process, and these estimates are next provided to another sub-module denoted LPI, being a latent parameter interference module, adapted to determine from the model estimate, as well as from the detector bounding boxes, an updated bounding box, which is provided back to the model learning module. The LPI module also checks whether convergence is present for several estimates of the model, and, if so, determines that the iterations are to be stopped, and that the estimated model determined so far is then of sufficient quality for being provided to the next stage. This final estimated model is denoted M, and its provision together with its descriptor (a person for the aforementioned example) to the next module, being the tagging module, is depicted by means of the thick black arrow.

This second module, will then receive the real-life media, which are generally different from the training input media used during the training phase. Also in this module an initial low level feature and descriptor extractor sub-module can be present, having a similar functionality as the one described for the training module. In some embodiments just one LLDE module can be present, which may be shared between the training and tagging module.

The thus determined low level features and descriptors are now provided to a latent variable estimator sub-module, denoted LVE. Its function is to determine a bounding box around the identified features/object as a bounding box is an example of a latent variable. Such a bounding box is then determined based on the earlier learned model M, and based upon the information from the other detectors, which also received the low level features and descriptors, in a similar way as in the training module. The other detectors therefore provide their bounding boxes also to the LVE, which is able to determine therefrom, from the learned model, and from the low level features and descriptors a more accurate value of the bounding box. Its function is similar to the LPI sub-module of the training module such that the learned model as well as the other detector information is used to estimate the maximum likelihood of class bounding boxes.

This predicted bounding box is then fed to another sub-module, denoted MBP, which is able to determine therefrom and from the learned model, and even more accurate bounding box, and to integrate it into the media. The tag or descriptor itself was provided together with the model information M from ML. By considering the bounding box provided by LVE, and by checking whether different scales of the model fit with this, it can be determined whether the model (a person) is present in the input media. In other implementations, LVE and MBP can be performed by one single module, and the scaling can be done on the low level features and descriptors, for determining whether there is a match with the input model. In case the model is not found in the input media, this information can also be provided at the output of the system. In case the to be detected object is present, MBP will provide the media with a tagged bounding box to an output of the system. In case the object to look for is not present in the media, this may be output as well.

While the principles of the invention have been described above in connection with specific apparatus, it is to be clearly understood that this description is made only by way of example and not as a limitation on the scope of the invention, as defined in the appended claims.

## Claims

1. Method for generating multimedia descriptors from input multimedia content, said method includes a training procedure for generating a learned model in an iterative procedure based on received training media content, and from a plurality of localization identifiers provided by a plurality of detectors, said method further including the steps of generating said multimedia descriptors together with associated localization identifiers, based on said learned model, and a step of providing the generated multimedia descriptors together with the associated localization identifiers within the media as an output.

2. method according to claim 1 further comprising the steps of generating low level training features and descriptors from said training media content such that said low level training features and descriptors are used by said plurality of detectors during said training procedure.

3. Method according to claim 1 or 2 wherein said multimedia descriptors with said associated localization identifiers are further determined from localization identifiers provided by said plurality of other detectors.

4. Method according to claim 3 further comprising a step of generating low level features and descriptors from said input multimedia content, which are further used by said plurality of detectors and during the generation of said localization identifiers.

5. System for generating multimedia descriptors from input multimedia content, said system including a training module for generating a learned model in an iterative procedure based on received training media content, and from a plurality of localization identifiers provided by a plurality of detectors comprised within said system, said system further being adapted to generate said multimedia descriptors together with associated localization identifiers, based on said learned model, and to provide the generated multimedia descriptors together with the associated localization identifiers within the media as an output.

6. System according to claim 5 further being adapted to generate low level training features and descriptors from said training media content such that said low level training features and descriptors are used by said plurality of detectors within said training module.

7. System according to claim 5 or 6 further being adapted to determine said multimedia descriptors with said associated localization identifiers are from localization identifiers determined and provided by said plurality of other detectors.

8. System according to claim 7 further being adapted to generate low level features and descriptors from said input multimedia content, and wherein said plurality of detectors are further adapted to use said low level features and descriptors during the generation of said localization identifiers.

9. A computer program product adapted to perform the method according to any of the claims 1 to 4.
